# NEUE EUROPÄISCHE PATENTSCHRIFT

(11) **EP 0 675 168 B2**
(45) Veröffentlichungstag und Bekanntmachung des Hinweises auf die Entscheidung über den Einspruch: **19.11.2003**
(45) Hinweis auf die Patenterteilung: 09.02.2000
(21) Anmeldenummer: 95103943.7
(22) Anmeldetag: 17.03.1995
(51) Int. Cl.: C08L 101/00, C08K 3/00, C08K 3/22, C08K 13/02

(54) **Polymerformmassen zur partiellen farblichen Veränderung durch Laserenergie, insbesondere zur Erzeugung bunter Zeichen**
Molding composition for partial changing of color by laser energy, particularly for producing signs
Mélange à mouler polymère pour changement partielle de couleurs par l'activité du laser, notamment pour la formation des signes en couleurs

(30) Priorität: 30.03.1994 DE 4411067
(43) Veröffentlichungstag der Anmeldung: 04.10.1995
(73) Patentinhaber: BAYER AG, 51368 Leverkusen (DE)
(72) Erfinder: El Sayed, Aziz, Dr., D-51375 Leverkussen (DE); Gerling, Frank, Dipl.-Ing, D-40223 Düsseldorf (DE); Messina, Salvatore, Dipl.-Ing., D-33378 Rheda-Wiedenbrück (DE); Magerstedt, Herbert, Dipl.-Ing., D-47445 Moers (DE); Idel, Karsten-Josef, Dr., D-47802 Krefeld (DE); Ostlinning, Edgar, Dr., D-40237 Düsseldorf (DE)

(56) Entgegenhaltungen:
- EP-A- 0 101 667
- EP-A- 0 190 997
- EP-A- 0 327 508
- EP-A- 0 641 821
- EP-B- 0 053 256
- WO-A-94/12352
- JP-A- 6 297 828
- JP-A- 58 210 937

## Beschreibung

Die vorliegende Erfindung betrifft gefärbte Polymerformmassen, die bei Absorption von Laserenergie farbige Zeichen auf dunklem Hintergrund mit sehr hohem Kontrastverhältnis ergeben.

Die Laserbeschriftung zur Kennzeichnung und Dekoration von Formteilen aus Kunststoffen gewinnt in zunehmendem Maße an Bedeutung. Neben der Wirtschaftlichkeit gegenüber herkömmlichen Beschriftungsverfahren bietet die Laserbeschriftung hohe Flexibilität hinsichtlich Schriftart, Schriftgröße und Schriftdesign, unabhängig von der Lotgröße. Das Markieren von elektrischen/elektronischen Bauelementen, Tastenkappen und Gehäusen ist eine klassische Anwendung für Laserbeschriftung.

Folgende Möglichkeiten zur Kennzeichnung von Kunststoffen mittels Laserbeschriftung sind beschrieben worden:

### 1. Dunkle Zeichen auf hellem Hintergrund

Eine Polymermatrix wird mit hellen Färbemitteln - Pigmenten oder Farbstoffen - eingefärbt. Bei der Laserbeschriftung wird durch Absorption der Laserenergie die Polymermatrix/das Färbemittel partiell carbonisiert. Dabei entsteht eine dunkle Verfärbung der hellen Polymermatrix. Diese Verfahren ist auf Polymere, die zum Carbonisieren neigen, beschränkt.
Die hierdurch erreichbaren Kontrastverhältnisse reichen für viele Einsatzgebiete nicht aus. Die Zugabe von Färbemitteln, die durch Absorption der Laserenergie ihre Farbe ändern, wird in EP 0 190 997 beschrieben. So wird zum Beispiel Polybutylenterephthalat mit Eisenoxid rot gefärbt. Bei der Laserbeschriftung entstehen dunkle Zeichen auf rotem Hintergrung. Das Kontrastverhältnis hat sich als nicht ausreichend erwiesen.

### 2. Helle Zeichen auf dunklem Hintergrund

Für diese Art der Beschriftung haben sich Polymere, Färbemittel oder Additive, die durch Absorption der Laserenergie zum Schäumen neigen, bewährt. Durch das Aufschäumen entstehen helle Schriften auf dunklem Untergrund. Die erreichbaren Kontrastverhältnisse sind für viele Einsatzgebiete nicht ausreichend (z.B. EP-A 522 370).
Überraschend wurde gefunden, daß durch die Kombination von organischen Färbemitteln mit anorganischen Pigmenten gleicher Farbe und Ruß farbige Zeichen auf dunklem Hintergrund durch Absorption der Laserenergie erreicht werden können.
Durch geeignete Rußkonzentration wird die Polymermatrix schwarz. Bei geringer Rußkonzentration wird eine farbige Schrift auf dunklem Farbuntergrund gleicher Farbe (Ton in Ton) erzielt.

Gegenstand der Erfindung sind gefärbte Polymerformmassen bestehend aus:

| | | |
|---|---|---|
| A. | 0,16 bis 1,4 Gew.-% | Färbemittelkombination, |
| B. | mindestens 50 Gew.-% | Polymermatrix, |
| C. | 0 bis kleines 50 Gew.-% | Verstärkungsstoffe, |
| D. | 0 bis 20 Gew.-% | Elastomermodifikator, |
| E. | 0 bis 20 Gew.-% | Flammschutzadditive und |
| F. | 0 bis 2 Gew.-% | Verarbeitungsadditive, |

dadurch gekennzeichnet, daß die Färbemittelkombination A besteht aus 0.1 bis 0.5 Gew.-% eines organischen Farbstoffes, 0.01 bis 0.5 Gew.-% eines anorganischen Pigmentes und 0.05 bis 0.4 Gew.-% Ruß.

Die Polymermassen eignen sich zur Erzeugung farbiger Zeichen auf dunklem Hintergrund mittels Laser.

Ein weiterer Gegenstand der Erfindung ist die Verwendung der gefärbten Polymere zur Herstellung von Formgegenständen, die mittels Laser beschriftet werden können.

Die Herstellung der erfindungsgemäßen Polymerformmassen erfolgt auf handelsüblichen Einwellen- und Zweiwellenextrudern. Die Dosierung der Farbstoffe erfolgt als Pulvermischung oder als Farbkonzentrat. Die Herstellung der Formteile erfolgt auf handelsüblichen Spritzgießmaschinen.

Als Färbemittelkombination A. der erfindungsgemäßen Formmassen eignen sich Mischungen aus organischen Farbstoffen/Pigmenten mit anorganischen Pigmenten gleicher Farbe und Ruß. Beispiele für Färbemittelkombinationen sind:
- Filamid Gelb/Lichtgelb 8G/Ruß,
- Heliogen Grün K 8730/Lichtgrün 5G/Ruß,
- Heliogen Blau K 6911 D/Lichtblau 100/Ruß,
- LISA Gelb 57Y/Lichtgelb 8G/Ruß,

Auch Mischungen aus verschiedenen organischen Pigmenten können verwendet werden.

In der Komponente A beträgt die Konzentration der organischen Farbstoffe/Pigmente 0,1 bis 0,5 Gew.-%, die Konzentration der anorganischen Pigmente liegt bei 0,01 bis 0,5 Gew.-%, die Rußkonzentration liegt zwischen 0.05 bis 0,4 Gew.-%.

Die erfindungsgemäßen Formmassen können als Färbemittel 0,16 bis 1,4 Gew.-% einer Kombination aus organischem Farbstoffen/Pigmenten +anorganischen Pigmenten gleicher Farbe enthalten.

Als Polymermatrix B. für die erfindungsgemäßen Formmassen eignen sich mindestens 50 Gew.-% Polymere, z. B. auf Basis Polyamid, Polyimid, Polyamidimide, Polyester, Polycarbonat, Polyestercarbonat, Polyether, Polyetherketone, Polyacrylate, Polymethacrylate, ABS, Polyolefine wie Polyethylen, Polypropylen, Polystyrol, Polyvinylchlorid, Polyoxymethylen, Polysulfone, Polyestersulfone, Polyphenylensulfid, Silikone, Kautschuke usw.

Als Verstärkung C. der erfindungsgemäßen Formmassen werden handelsübliche Glasfasern und/oder Mineralfasern und/oder mineralische Füllstoffe wie Kaolin, Wollastonit, Talkum, Kreide usw. verwendet.

Als Elastomermodifikator D. gemäß dieser Erfindung werden handelsübliche EP(D)M-Kautschuke, Pfropfkautschuke auf Basis Butadien Styrol Acrylnitril, Acrylatkautschuke, Polyurethane oder EVA-Copolymere mit oderohne funktionelle Kopplungsgruppen verwendet, weiterhin solche auf Basis organischer Halogenverbindungen, Stickstoffund Phosphorverbindungen.

Als Flammschutzadditive E. werden handelsübliche organische Verbindungen oder Halogenverbindungen mit Synergisten oder handelsübliche organische Stickstoffverbindungen oder organisch/anorganische Phosphorverbindungen verwendet. Auch mineralische Flammschutzadditive wie Mg-hydroxid oder Ca-Mg-Carbonat-Hydrat können eingesetzt werden.

Die Verarbeitungsadditive F. bestehen aus handelsüblichen Gleitmitteln, Stabilisatoren, Entformungsmitteln und Nukleierungsmitteln.

Als Energiequellen zur Beschriftung und Kennzeichnung können handelsübliche Lasersysteme, bevorzugt Nd-YAG-Festkörper, verwendet werden. Die Wellenlänge kann zwischen 193 nm und 10.600 nm, bevorzugt 1 064 nm, liegen.

Aus den erfindungsgemäßen Formmassen können die üblichen Bauteile von Geräten hergestellt werden, bei denen Beschriftung aufgebracht wird, z.B. Gehäuse, Tastaturen, Armaturen, Schrifttafeln, Leuchttafeln usw.

### Beispiele

Folgende Produkte sind in den Beispielen verwendbar
Polyamid 6 (Durethan B 31SK® der Bayer AG),
Polyamid 66 glasfaserverstärkt (30 %)(Durethan AKV 30 H® der Bayer AG),
Polybutylenterephthalat (Pocan B 1506® der Bayer AG),
Polycarbonat (Makrolon 2800® der Bayer AG),
ABS (Novodur P2H® der Bayer AG),
PMMA (Plexiglas 7N® der Fa. Röhm GmbH, Darmstadt),
Bayertitan RKB-2® der Bayer AG),
Licht-(-gelb 8G®, -blau 100®, und -grün 5G®) der Bayer AG,
Filamid Gelb R® der Ciba Geigy,
Filamid Rot GR® der Ciba Geigy,
Heliogen Grün K 8730® der BASF,
Heliogen Blau 6911D® der BASF,
Ultramarinblau 690® der Fa. Nubiola,
Macrolexfluoreszenzgelb 10 GN® der Bayer AG,
LISA Gelb 57Y® der Bayer AG,
LISA Rot 61 R® der Bayer AG,
Ruß (Printex 300®/Degussa), (Raven 2000®/Rhein Chemie), Microlen schwarz® (Ciba Geigy) Sachtolith® der Fa. Sachtleben.

### Beispiele 1 bis 3,5 (Tabelle 1)

Die Farbstoffe wurden mit dem Granulat vorgemischt und über einen Zweiwellenschneckenkneter extrudiert und granuliert. Das erhaltene Granulat wurde auf einer Arburg Spritzgießmaschine zu Platten verspritzt und mit einem FOBALLAS ND-YAG-Laser beschriftet.

Je nach Rußkonzentration wurden farbige Schriftzeichen auf schwarzem Hintergrund oder farbige Schriftzeichen auf dunklem Hintergrund oder farbige Schriftzeichen auf dunklem Hintergrund gleicher Farbe (Ton in Ton) erzeugt. Alle Schriftzeichen und Symbole zeichnen sich durch sehr gute Kontraste aus.

### Beispiele 9 bis 11,13 (Tabelle 2)

Die Beispiele 1 bis 8 wurden mit glasfaserverstärktem PA 66 (AKV 30 H) wiederholt. Auch hier wurden farbige Schriftzeichen und Symbole mit sehr gutem Kontrastverhältnis erzielt.

### Beispiele 17 bis 19,21 (Tabelle 3)

Beispiele 1 bis 8 wurden mit Polyester (Polybutylenterephthalat) wiederholt. Erreicht wurden farbige Schriftzeichen und Symbole mit sehr gutem Kontrastverhältnis.

### Beispiele 26,29 (Tabelle 4)

Die Farbstoffe wurden mit dem Polycarbonat oder PMMA-Grabulat vorgemischt und über einen Zweiwellenschneckenkneter extrudiert und grabuliert. Das erhaltene Granulat wurde auf einer Arburg-Spritzgießmaschine zu Platten verspritzt und mit einem FOBALLAS ND-YAG-Laser beschriftet.

Auch hierbei wurden farbige Schriftzeichen und Symbole mit gutem Kontrastverhältnis erreicht.

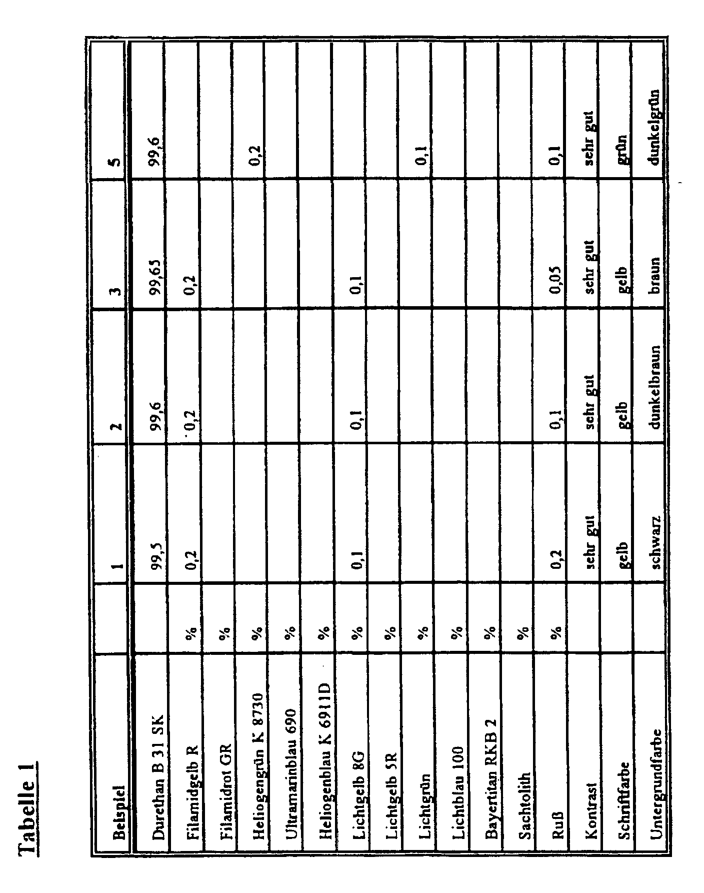

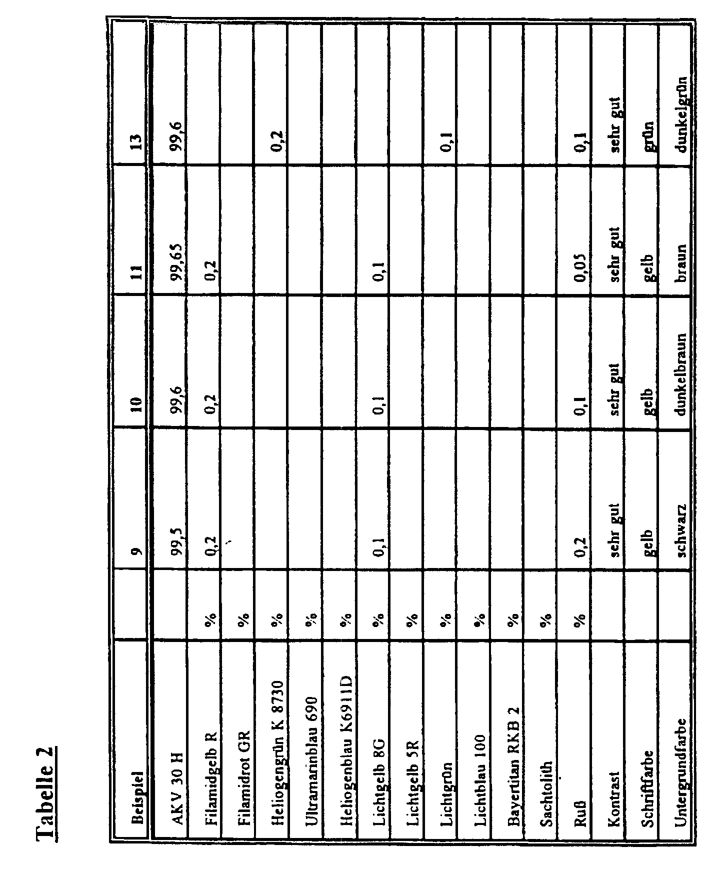

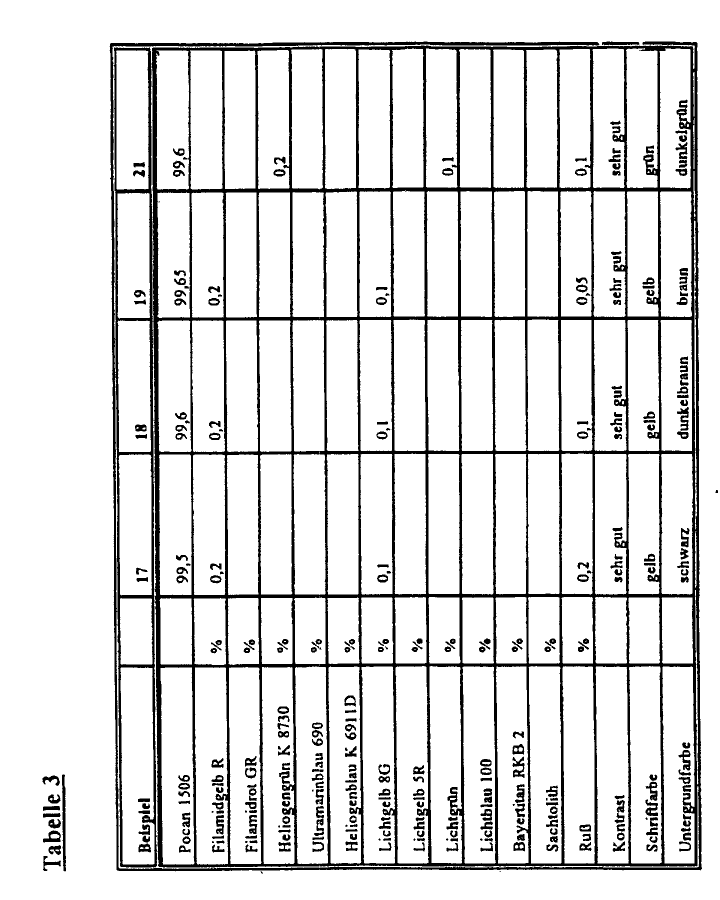

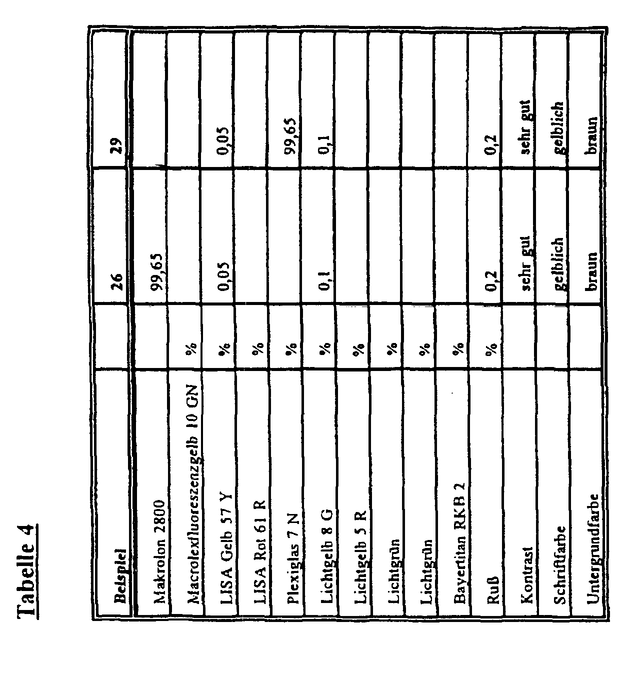

## Patentansprüche

1. Polymerformmasse bestehend aus:
| | | |
|---|---|---|
| A. | 0,16 bis 1,4 Gew.-% | Färbemittelkombination. |
| B. | mindestens 50 Gew.-% | Polymermatrix, |
| C. | 0 bis kleines 50 Gew.-% | Verstärkungsstoffe, |
| D. | 0 bis 20 Gew.-% | Elastomermodifikator, |
| E. | 0 bis 20 Gew.-% | Flammschutzadditive und |
| F. | 0 bis 2 Gew.-% | Verarbeitungsadditive, |
**dadurch gekennzeichnet, daß** die Färbemittelkombination A besteht aus 0,1 bis 0,5 Gew.-% eines organischen Farbstoffes/Pigmentes, 0,01 bis 0,5 Gew.-% eines anorganischen Pigmentes gleicher Farbe und 0,05 bis 0,4 Gew.-% Ruß.

2. Formmassen nach Anspruch 1, **dadurch gekennzeichnet, daß** sie als Polymere mindestens 50 Gew.-% Polyamide, Polyester, Polycarbonate, Polyestercarbonate, Polymethacrylate, ABS, Polystyrol, Polyoxymethylen oder Polyolefine enthalten.

3. Formmassen nach Anspruch 1, **dadurch gekennzeichnet, daß** sie als Verstärkungsstoffe 0 bis kleines 50 Gew. % Glasfasern, Mineralfasern oder mineralische Füllstoffe enthalten.

4. Formmassen nach Anspruch 1, **dadurch gekennzeichnet, daß** sie als Elastomermodifikator 0 bis 20 Gew.-% EPM, RPDM, Acrylatkautschuke oder EVA-Copolymere enthalten.

5. Formmassen nach Anspruch 1, **dadurch gekennzeichnet, daß** sie als Flammschutzmittel 0 bis 20 Gew.-% handelsübliche Flammschutzadditive auf Basis organischer Halogen-, Stickstoff-, Phorphorverbindungen enthalten.

6. Verwendung der Formmassen gemäß Anspruch 1 zur Herstellung von mittels Laserbeschriftung gekennzeichneten Formteilen.

## Claims

1. Polymer moulding composition consisting of:
| | | |
|---|---|---|
| A. | 0.16 to 1.4 wt.% | colourant combination, |
| B. | at least 50 wt.% | polymer matrix, |
| C. | 0 to less than 50 wt.% | reinforcement materials, |
| D. | 0 to 20 wt.% | elastomeric modifier, |
| E. | 0 to 20 wt.% | flame retardant additives and |
| F. | 0 to 2 wt.% | processing additives, |
**characterised in that** the colourant combination A consists of 0.1 to 0.5 wt.% of an organic dye/pigment, 0.01 to 0.5 wt.% of an inorganic pigment of the same colour; and 0.05 to 0.4 wt.% of carbon black.

2. Moulding compositions according to claim 1, **characterised in that** they contain at least 50 wt.% of polyamides, polyesters, polycarbonates, polyester carbonates, polymethacrylates, ABS, polystyrene, polyoxymethylene or polyolefins as polymers.

3. Moulding compositions according to claim 1, **characterised in that** they contain 0 to less than 50 wt.% glass fibres, mineral fibres or mineral fillers as reinforcing materials.

4. Moulding compositions according to claim 1, **characterised in that** they contain 0 to 20 wt.% of EPM, RPDM, acrylate rubbers or EVA copolymers as elastomeric modifier.

5. Moulding compositions according to claim 1, **characterised in that** they contain 0 to 20 wt.% of commercially available flame retardant additives based on organic halogen, nitrogen or phosphorus compounds as flame retardant.

6. Use of moulding compositions according to claim 1 for the production of mouldings marked by means of laser inscription.

## Revendications

1. Matières à mouler polymères, consistant en
| | |
|---|---|
| A. | 0,1 à 1,4 % en poids d'une combinaison de colorants, |
| B. | au moins 50 % en poids d'une gangue polymère, |
| C. | 0 à moins de 50 % en poids de matières renforçantes, |
| D. | 0 à 20 % en poids d'un modifiant élastomère, |
| E. | 0 à 20 % en poids d'additifs ignifugeants et |
| F. | 0 à 2 % en poids d'additifs de façonnage, |
**caractérisées en ce que** la combinaison de colorants A consiste en 0,1 à 0,5 % en poids d'un colorant pigment organique, 0,01 à 0,5 % en poids d'un pigment minéral de même couleur et 0,05 à 0,4 % en poids de noir de carbone.

2. Matières à mouler selon la revendication 1, **caractérisées en ce qu'**elles contiennent en tant que polymères au moins 50 % en poids de polyamides, polyesters, polycarbonates, polyester-carbonates, polyméthacrylates, ABS, polystyrène, polyoxyméthylène ou polyoléfines.

3. Matières à mouler selon la revendication 1, **caractérisées en ce qu'**elles contiennent en tant que matières renforçantes 0 à moins de 50 % de fibres de verres, de fibres minérales ou de matières de charge minérales.

4. Matières à mouler selon la revendication 1, **caractérisées en ce qu'**elles contiennent en tant que modifiant élastomère, 0 à 20 % en poids de EPM, de RPDM, de caoutchoucs d'acrylate ou de copolymères EVA.

5. Matières à mouler selon la revendication 1, **caractérisées en ce qu'**elles contiennent, en tant qu'additifs ignifugeants, 0 à 20 % en poids, d'additifs ignifugeants du commerce à base de composés organiques halogénés, azotés, phosphorés.

6. Utilisation des matières à mouler selon la revendication 1 pour la fabrication de pièces moulées **caractérisées par** des inscriptions faites au laser.
